# EUROPEAN PATENT SPECIFICATION

(11) **EP 1 864 839 B1**
(45) Date of publication and mention of the grant of the patent: **15.04.2009**
(21) Application number: 07011144.8
(22) Date of filing: 06.06.2007
(51) Int. Cl.: B60H 1/32, F25B 43/00

(54) **Automotive air-conditioning system**
Fahrzeugklimaanlage
Climatisation pour véhicule

(30) Priority: 06.06.2006 JP 2006157307
(43) Date of publication of application: 12.12.2007
(73) Proprietor: Sanden Corporation, Isesaki-shi, Gunma 372-8502 (JP)
(72) Inventor: Tsuboi, Masato c/o Sanden Corporation, Isesaki-shi Gunma 372-8502 (JP); Suzuki, Kenichi c/o Sanden Corporation, Isesaki-shi Gunma 372-8502 (JP); Matsumoto, Yuuichi sanden Corporation, Isesaki-shi Gunma 372-8502 (JP)
(74) Representative: Feldmeier, Jürgen

(56) References cited:
- EP-A2- 1 052 443
- US-A- 5 491 983
- US-A- 5 704 226
- US-A1- 2002 046 570
- US-B1- 6 615 608

## Description

### BACKGROUND OF THE INVENTION

### Field of the Invention

The present invention relates to an automotive air-conditioning system.

### Description of the Related Art

A refrigeration circuit of an automotive air-conditioning system has a circulation path through which a refrigerant circulates. The circulation path includes a first flow channel extending within an engine room and a second flow channel extending within a vehicle interior. The first and second flow channels are circularly connected to each other near a partition wall that separates the engine room from the vehicle interior.

In general, a compressor, a radiator (condenser or gas cooler), a pressure reducer (expansion valve) and an evaporator are interposed in the circulation path in the order named in the flowing direction of the refrigerant.

A gas-liquid separator for separating a gas-phase component and a liquid-phase component contained in the refrigerant is also interposed in the circulation path.
The gas-liquid separator is placed downstream of the radiator or of the evaporator.

In consideration of global environment, a refrigeration circuit using a refrigerant with a small global warming potential has been recently developed. Refrigerants of this type include natural CO₂ (carbon dioxide) as an example. In the refrigeration circuit using CO₂ as refrigerant, CO₂ is not condensed by the radiator, so that the gas-liquid separator is disposed downstream from the evaporator.

In some cases, for the purpose of enhancing the coefficient of performance, an internal heat exchanger is interposed in the circulation path as seen in the refrigeration circuit using CO₂ which is disclosed in Unexamined Japanese Patent Publication No. 2001-56188.

A conventional automotive air-conditioning system has a compressor, a radiator, a pressure reducer, an evaporator and a gas-liquid separator as primary devices composing the refrigeration circuit, and also includes, as parts for connecting between the inlets and outlets of the primary devices, pipes extending between the primary devices and connecting members for connecting between these devices and the pipes.

An example for such a air-conditioning system is shown in US-A-2002/0046570. Here a air-conditioning system is disclosed. The connection between the elements is performed by tubes in one embodiment. In an other embodiment, a plurality of elements of the air-conditioning system, the pressure reducer, the separator, an internal heat exchanger, and a expansion valve are unified in one module.

For that reason, there are a large number of parts composing the automotive air-conditioning system, and this makes it cumbersome and complicated to install the automotive air-conditioning system in a vehicle.

### SUMMARY OF THE INVENTION

It is an object of the invention to provide an automotive air-conditioning system that includes a reduced number of parts and is easy to install in a vehicle.

This object is achieved by the features of claim 1. Further developments are the subject-matter of the subclaims.

The automotive air-conditioning system according to the invention has a gas-liquid separator, a compressor and a radiator. The gas-liquid separator, the compressor and the radiator are interposed in a first flow channel of a refrigerant which extends within an engine room in the order named in a flowing direction of the refrigerant. The automotive air-conditioning system also includes a pressure reducer and an evaporator. The pressure reducer and the evaporator are interposed in a second flow channel of the refrigerant which extends within a vehicle interior in the order named in the flowing direction of the refrigerant. The automotive air-conditioning system also has a connecting device disposed near a partition wall that separates the engine room from the vehicle interior. The connecting device circularly connects the first and second flow channels to each other. The connecting device includes a first connecting portion that is formed at a downstream end of the second flow channel and a second connecting portion that is formed at an inlet of the gas-liquid separator and is connected to the first connecting portion.

In the connecting device of the automotive air-conditioning system of the invention, the first connecting portion that is formed at the downstream end of the second flow channel and the second connecting portion that is formed in the gas-liquid separator are connected to each other. This eliminates the need for a pipe for connecting between the first connecting portion and the gas-liquid separator and a connecting member attached to the pipe, and then reduces the number of parts.

Therefore, the automotive air-conditioning system is easy to install in the vehicle and is low in price.

The automotive air-conditioning system further has an internal heat exchanger that is interposed in the first flow channel. The internal heat exchanger includes a high-temperature portion that is interposed in a high-pressure area of the first flow channel which extends between the radiator and the pressure reducer, a low-temperature portion that is interposed in a low-pressure area of the first flow channel which extends between the gas-liquid separator and the compressor, and receives heat from the high-temperature portion, and a third connecting portion that is formed at an inlet of the low-temperature portion. The gas-liquid separator includes a fourth connecting portion that is formed at an outlet of the gas-liquid separator and is connected to the third connecting portion.

In the automotive air-conditioning system, the third connecting portion of the internal heat exchanger and the fourth connecting portion of the gas-liquid separator are connected to each other. This eliminates the need for a pipe for connecting between the low-temperature portion of the internal heat exchanger and the gas-liquid separator and a connecting member attached to the pipe. Therefore, the number of parts is further reduced. This makes it easier to install the automotive air-conditioning system in the vehicle and allows for a low price of the system.

According to the invention, the internal heat exchanger includes a fifth connecting portion that is formed at the outlet of the high-temperature portion. The connecting device includes a sixth connecting portion that is formed at an upstream end of the second flow channel and a bridge portion that is formed integrally with both the second and fourth connecting portions of the gas-liquid separator.
The bridge portion is connected to both the fifth and sixth connecting portions and has an internal flow channel that communicates between the outlet of the high-temperature portion and the upstream end of the second flow channel.

In the automotive air-conditioning system according to the invention, the sixth connecting portion of the connecting device and the fifth connecting portion of the internal heat exchanger are connected to the bridge portion of the gas-liquid separator. This eliminates the need for a pipe for connecting between the sixth connecting portion of the connecting device and the high-temperature portion of the internal heat exchanger and a connecting member attached to the pipe. Therefore, the number of parts is further reduced. This makes it easier to install the automotive air-conditioning system in the vehicle and allows a low price of the system.

According to the invention, the automotive air-conditioning system has a supporting device for supporting the gas-liquid separator by using the partition wall.

In the automotive air-conditioning system according to the invention, because of the supporting device for supporting the gas-liquid separator by using the partition wall, the gas-liquid separator is installed in the vehicle with less difficulty as compared to the case in which the gas-liquid separator is supported by another portion of the vehicle. This makes it easier to install the automotive air-conditioning system in the vehicle.

Preferably, the supporting device includes a bracket for holding the gas-liquid separator and an engaging member that is interposed between the bracket and the partition wall and engages the bracket with the partition wall.

In the preferable automotive air-conditioning system, the gas-liquid separator is more easily installed in the vehicle by using the partition wall to support the gas-liquid separator with the bracket and the engaging member intervening therebetween.

Preferably, the supporting device further includes a buffering member having thermal insulating properties and elasticity, which is interposed between the bracket and the partition wall.

In the preferable automotive air-conditioning system, since the supporting device further includes the buffering member having the thermal insulating properties and the elasticity, the heat, vibrations and noises in the engine room are prevented from being transmitted to the vehicle interior. Consequently, the comfort of vehicle occupants is maintained in the vehicle to which the above-described automotive air-conditioning system is applied.

Preferably, the first and second connecting portions of the connecting device, the fourth connecting portion of the gas-liquid separator and the third connecting portion of the internal heat exchanger are arranged in one straight line, and the sixth connecting portion of the connecting device, the bridge portion and the fifth connecting portion of the internal heat exchanger are arranged in another straight line parallel to the one straight line.

In the preferable automotive air-conditioning system, the first and second connecting portions of the connecting device, the third connecting portion of the internal heat exchanger and the fourth connecting portion of the gas-liquid separator are arranged in the one straight line, and the sixth connecting portion of the connecting device, the bridge portion and the fifth connecting portion of the internal heat exchanger are arranged in the another straight line parallel to the one straight line. It is then possible to connect between the first to sixth connecting portions and the bridge portion in one connection direction without difficulty. This makes it easier to install the automotive air-conditioning system in the vehicle.

Preferably, the first and sixth connecting portions of the connecting device are integrally formed. The third and fifth connecting portions of the internal heat exchanger are integrally formed. The connecting device includes a single bolt that couples the first connecting portion with the second connecting portion, the bridge portion with the fifth and sixth connecting portions, and the third connecting portion with the fourth connecting portion.

In the preferable automotive air-conditioning system, the first and sixth connecting portions of the connecting device are integrally formed, and the third and fifth connecting portions of the internal heat exchanger are integrally formed. In this system, the first connecting portion is coupled with the second connecting portion, the bridge portion with the fifth and sixth connecting portions, and the third connecting portion with the fourth connecting portion with the single bolt. This further reduces the number of parts of the automotive air-conditioning system and makes it easier to install the system in the vehicle, which allows a low price of the system.

Preferably, the refrigerant is CO₂.

Since the preferable automotive air-conditioning system uses CO₂ as refrigerant, it is environmentally friendly. At the same time, the automotive air-conditioning system separates the liquid-phase component contained in the refrigerant by using the gas-liquid separator, so that liquid compression in the compressor is prevented, and the durability of the system is secured.

### BRIEF DESCRIPTION OF THE DRAWINGS

The present invention will become more fully understood from the detailed description given hereinbelow and the accompanying drawings which are given by way of illustration only, and thus, are not limitative of the present invention, and wherein:
FIG. 1 is a schematic configuration view of a refrigeration circuit of an automotive air-conditioning system according to one embodiment of the present invention;
FIG. 2 is a top view showing partly in section a connecting structure between first and second flow channels in a circulation path of the refrigeration circuit of FIG. 1;
FIG. 3 is a sectional view, taken along line III-III in FIG. 2; and
FIG. 4 is a perspective exploded view of the connecting structure shown in FIG. 2.

### DETAILED DESCRIPTION

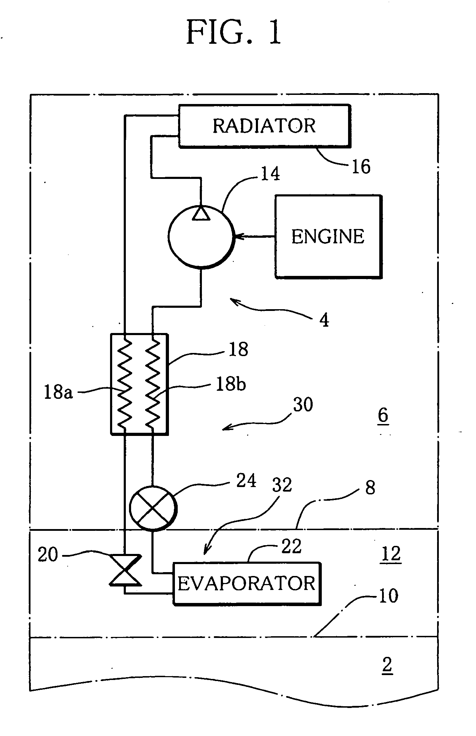

FIG. 1 schematically shows a refrigeration circuit of an automotive air-conditioning system according to one embodiment. The refrigeration circuit is of a vapor compression type and is used for refrigerating or dehumidifying an air flow that is introduced into a vehicle interior 2.

The refrigeration circuit has a circulation path 4. CO₂ refrigerant (R-744) that is a natural refrigerant circulates through the circulation path 4 while containing a small amount of lubricating oil serving as refrigerating machine oil. The circulation path 4 extends from an engine room 6 through a partition wall 8 to a front portion of the vehicle interior 2. The front part of the vehicle interior 2 is partitioned by an installment panel 10 and serves as an equipment space 12.

In the circulation path 4, there are interposed a compressor 14, a radiator (gas cooler) 16, a high-temperature portion 18a of an internal heat exchanger 18, a pressure reducer (expansion valve) 20, an evaporator 22, a gas-liquid separator (liquid receiver) 24, and a low-temperature portion 18b of the internal heat exchanger 18 in the order named in a flowing direction of the refrigerant.

In this refrigeration circuit, the compressor 14 that has been supplied with motive power from the engine sucks a low-temperature and pressure gas-phase refrigerant from the low-temperature portion 18b of the internal heat exchanger 18. The compressor 14 compresses the sucked refrigerant to bring it into a high-temperature and pressure state, and then discharges the refrigerant toward the radiator 16. In other words, the compressor 14 carries out the steps of sucking, compressing and discharging the refrigerant. As a result, the refrigerant is circulated through the circulation path 4, passing through the radiator 16, the high-temperature portion 18a of the internal heat exchanger 18, the pressure reducer 20, the evaporator 22, the gas-liquid separator 24, and the low-temperature portion 18b of the internal heat exchanger 18 in order.

When passing through the radiator 16, the refrigerant is air-cooled and is decreased in temperature. Subsequently when passing through the high-temperature portion 18a of the internal heat exchanger 18, the refrigerant is cooled by exchanging heat with a refrigerant passing through the low-temperature portion 18b of the internal heat exchanger 18, and is further decreased in temperature. The high-pressure supercritical or liquid-phase refrigerant thus reduced in temperature is expanded and decreased in pressure and temperature when passing through the pressure reducer 20, and turns into a low-temperature and pressure refrigerant in a gas-liquid mixture (two-phase) state.

When the refrigerant, which is in the gas-liquid mixture state, passes through the evaporator 22A, the liquid-phase component contained therein evaporates while absorbing the heat of vaporization from an ambient gas. As a result, an air flow running outside the evaporator 22 turns into cold air. The cold air flows into the vehicle interior 2, thereby air-conditioning or dehumidifying the vehicle interior 2.

When the low-temperature and pressure refrigerant from which the liquid-phase component is evaporated by the evaporator 22 passes through the gas-liquid separator 24, a residual liquid-phase component is virtually completely removed from the refrigerant. The low-temperature and pressure gas-phase refrigerant subsequently passes through the low-temperature portion 18b of the internal heat exchanger 18. At this point, the refrigerant is heated by exchanging heat with the refrigerant passing through the high-temperature portion 18a of the internal heat exchanger 18, thereby having a degree of superheat. The refrigerant having the degree of superheat is sucked into the compressor 14, and the above-described cycle is repeated.

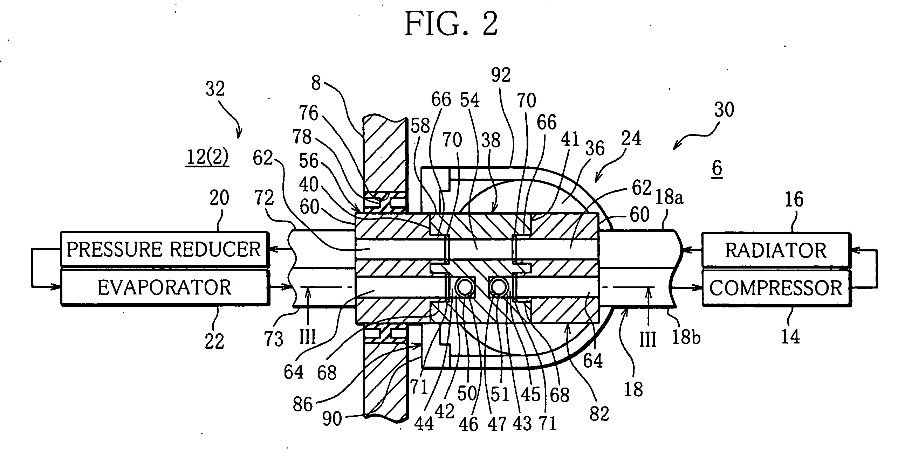

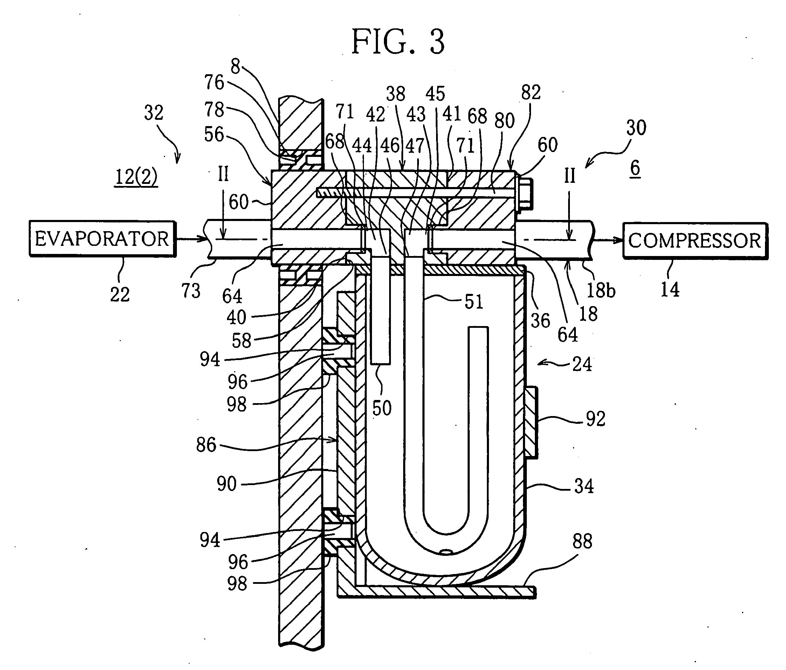

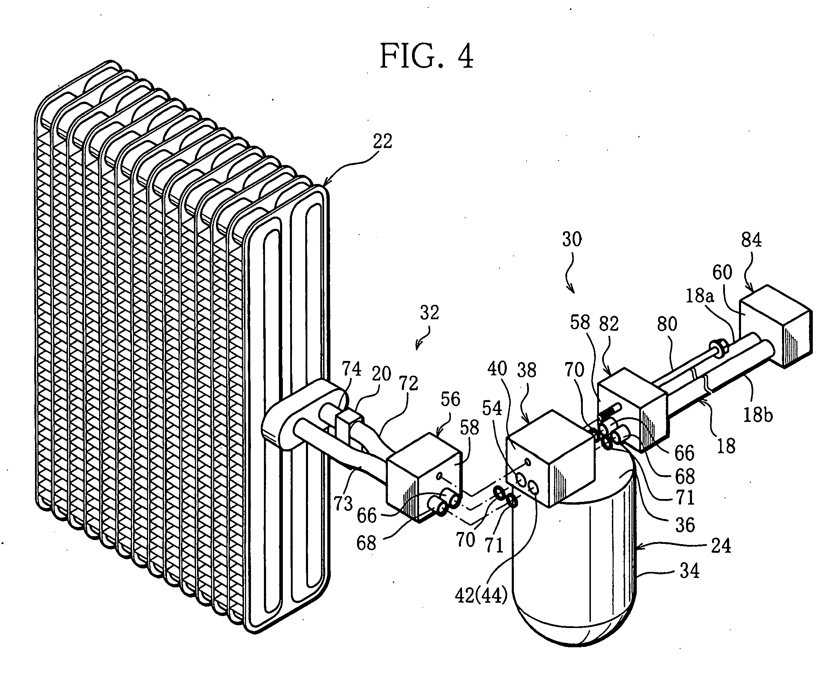

The circulation path 4 is roughly divided into a first flow channel 30 extending within the engine room and a second flow channel 32 extending within the equipment space 12. The first and second flow channels 30 and 32 are connected to each other near the partition wall 8 so as to form the annular circulation path 4. A connecting device or a connecting structure of the first and second flow channels 30 and 32 will be described below with reference to FIGS. 2 to 4.

The gas-liquid separator 24 has a tubular body 34. The tubular body 34 has a shape of a circular cylinder with a bottom and an open upper end. A disc-like cover plate 36 is placed at the open end of the tubular body 34, and an outer circumference of the cover plate 36 is airtightly connected to the tubular body 34.

For example, a lower surface of a block 38 in a shape of a rectangular parallelepiped is brought into airtight contact with an upper surface of the cover plate 36. The block 38 has a pair of faces (contacted surfaces) 40 and 41 that extend parallel to the partition wall 8.

In the block 38, there are formed a supply path 42 for supplying the refrigerant to the tubular body 34 and a discharge path 43 for discharging the refrigerant from the tubular body 34. The supply path 42 extends in the shape of letter L and has a horizontal portion 44 and a vertical portion 46. The discharge path 43 also extends in the shape of letter L and has a horizontal portion 45 and a vertical portion 47. The horizontal portions 44 and 45 extend along the same axis perpendicular to the partition wall 8. An outer end of the horizontal portion 44 of the supply path 42 opens in the contacted surface 40 located on the side of the partition wall 8. An outer end of the horizontal portion 45 of the discharge path 43 opens in the contacted surface 41 located opposite to the partition wall 8.

The cover plate 36 is pierced by a straight supply pipe 50 and a J-shaped discharge pipe 51 in an airtight manner. Upper ends of the supply pipe 50 and the discharge pipe 51 are connected to lower ends of the vertical portions 46 and 47 of the supply path 42 and the discharge path 43, respectively.

There is also formed a horizontal hole 54 in the block 38. The horizontal hole 54 runs through the block 38, extending parallel to the horizontal portions 44 and 45 of the supply path 42 and the discharge path 43. Accordingly, both ends of the horizontal hole 54 open in the contacted surfaces 40 and 41, respectively.

A first flange 56 is connected to the block 38 from the partition wall 8 side. The first flange 56 is formed, for example, into a rectangular parallelepiped, and has a contact surface 58 in surface contact with the contacted surface 40 of the block 38 and a back surface 60 located opposite to the contact surface 58.

In the first flange 56, there are formed two through holes 62 and 64 parallel to each other. Both ends of the through holes 62 and 64 open in the contact surface 58 and the back surface 60, respectively. The open ends of the through holes 64 and 62 in the contact surface 58 are positioned to coincide with the open ends of the horizontal portion 44 and the horizontal hole 54 in the contacted surface 40, respectively.

Therefore, the through hole 62 leads to the horizontal hole 54, and the through hole 64 to the supply path 42. In order to maintain airtightness between the through hole 62 and the horizontal hole 54 and that between the through hole 64 and the supply path 42, tubular portions 66 and 68 are protruding from open edges of the through holes 62 and 64. The tubular portions 66 and 68 are inserted into the horizontal hole 54 and the horizontal portion 44, respectively. Gaskets 70 and 71 are fitted in a gap between a tip end of the tubular portion 66 and an inner surface of the horizontal hole 54 and a gap between a tip end of the tubular portion 68 and an inner surface of the horizontal portion 44, respectively.

In the back surface 60 of the first flange 56, one ends of pipes 72 and 73 are connected to the open ends of the through holes 62 and 64, respectively. The other end of the pipe 73 is coupled to an outlet of the evaporator 22. The other end of the pipe 72 is coupled to an inlet of the pressure reducer 20. An outlet of the pressure reducer 20 and an inlet of the evaporator 22 are connected to each other through a pipe 74.

The first flange 56 runs through a piping hole 76 formed in the partition wall 8. Disposed in between an outer circumferential surface of the first flange 56 and an inner circumferential surface of the piping hole 76 is, for example, a rubber diaphragm 78.

The first flange 56 is fastened to the block 38, for example, with a single connecting bolt 80 that is a tap bolt. An insertion hole in which a shaft of the connecting bolt 80 is inserted is formed in the block 38 parallel to the horizontal hole 54. A thread portion formed at a tip end of the connecting bolt 80 is screwed into a screw hole that opens in the contact surface 58 of the first flange 56.

In the above-described manner, the first and second flow channels 30 and 32 of the circulation path 4 are connected to each other near the partition wall 8 by fastening the first flange 56 to the block 38.

Not only the first flange 56 but the internal heat exchanger 18 is fastened to the block 38 with the connecting bolt 80.

To be more specific, the high-temperature portion 18a and the low-temperature portion 18b of the internal heat exchanger 18 are formed of pipes (heat exchange pipes) arranged to contact each other. Both ends of the high-temperature portion 18a and those of the low-temperature portion 18b are connected to a second flange 82 and a third flange 84, respectively.

The second flange 82 has a configuration that is virtually identical to that of the first flange 56. Parts of the second flange 82 which are identical to those of the first flange 56 will be provided with the same reference marks, and descriptions thereof will be omitted. The second flange 82 differs from the first flange 56 in that, instead of a screw hole, an insertion hole penetrated by a connecting bolt 80 is formed.

In a back surface 60 of the second flange 82, the outlet of the high-temperature portion 18a and the inlet of the low-temperature portion 18b are connected to open ends of through holes 62 and 64, respectively. Accordingly, the through hole 62 leads to the outlet of the high-temperature portion 18a, and the through hole 64 of the second flange 82 to the low-temperature portion 18b.

A contact surface 58 of the second flange 82 is in surface contact with the contacted surface 41 of the block 38. The open ends of the through holes 62 and 64 in the contact surface 58 of the second flange 82 are positioned to coincide with the open ends of the horizontal hole 54 and the horizontal portion 45 in the contacted surface 41, respectively.

Therefore, the through hole 62 of the second flange 82 leads to the horizontal hole 54, and the through hole 64 of the second flange 82 to the discharge path 43.
Airtightness between the through hole 62 and the horizontal hole 54 and that between the through hole 64 and the discharge path 43 are secured by gaskets 70 and 71, respectively, which are fitted in a gap between a tip end of a tubular portion 66 of the second flange 82 and the inner surface of the horizontal hole 54 and a gap between a tip end of a tubular portion 68 of the second flange 82 and an inner surface of the horizontal portion 45 of the discharge path 43.

A third flange 84 also has a configuration that is virtually identical to that of the first flange 56. The inlet of the high-temperature portion 18a and the outlet of the low-temperature portion 18b are connected to a back surface 60 of the third flange 84.

As described above, the block 38 of the gas-liquid separator 24, the first flange 56, and the second flange 82 are arranged on the same axis perpendicular to the partition wall 8. The block 38 is sandwiched between the first and second flanges 56 and 82. Therefore, the gas-liquid separator 24 is located near the partition wall 8 and is supported by the partition wall 8.

To be more concrete, the tubular body 34 of the gas-liquid separator 24 is placed on a bottom wall 88 of an L-shaped bracket 86. A lateral wall 90 of the bracket 86, which is vertically set, is located between the tubular body 34 and the partition wall 8 and in line contact with an outer circumferential surface of the tubular body 34. Both ends of a metal band 92 are fixed in the virtual center of the lateral wall 90 as viewed in a vertical direction. The band 92 is curved along the outer circumference of the tubular body 34. The bracket 86 holds the gas-liquid separator 24 in consort with the band 92.

The lateral wall 90 of the bracket 86 is located away from the partition wall 8. In the lateral wall 90, there are formed two pin holes 94 arranged vertically away from each other. Fitted respectively in the pin holes 94 are two pins 96 protruding integrally from the partition wall 8. Accordingly, the bracket 86 and the gas-liquid separator 24 are supported by the partition wall 8 through the pins 96. Since the block 38 is fastened to the first flange 56 with the connecting bolt 80, the pins 96 are prevented from coming off from the pin holes 94.

Each of the pins 96 is fitted with a buffering member 98. The buffering member 98 is, for example, made of rubber and has thermal insulating properties and elasticity. The buffering member 98 has a tubular portion sandwiched between an outer circumferential surface of the corresponding pin 96 and an inner circumferential surface of the corresponding pin hole 94, and a stopper portion sandwiched between the lateral wall 90 of the bracket 86 and the partition wall 8.

According to a connecting device or a connecting structure of the first and the second flow channels 30 and 32, the first flange 56 formed at a downstream end of the second flow channel 32 and the block 38 formed in the gas-liquid separator 24 are connected to each other. This eliminates the need for a pipe for connecting between the first flange 56 and the gas-liquid separator 24 and a connecting member attached to the pipe, thereby reducing the number of parts. Consequently, the automotive air-conditioning system is easy to install in the vehicle and is low in price.

In the automotive air-conditioning system, the second flange 82 of the internal heat exchanger 18 and the block 38 of the gas-liquid separator 24 are connected to each other. This eliminates the need for a pipe for connecting between the low-temperature portion 18b of the internal heat exchanger 18 and the gas-liquid separator 24 and a connecting member attached to the pipe, thereby further reducing the number of parts. This makes it easier to install the automotive air-conditioning system in the vehicle and allows for a low price of the system.

In the automotive air-conditioning system, the first and second flanges 56 and 82 are connected to the block 38 of the gas-liquid separator 24, and the high-temperature portion 18a of the internal heat exchanger 18 and the pressure reducer 20 are communicated with each other through the horizontal hole 54 of the block 38. This eliminates the need for a pipe for connecting between the high-temperature portion 18a of the internal heat exchanger 18 and the pressure reducer 20 and a connecting member attached to the pipe, thereby further reducing the number of parts. Consequently, the automotive air-conditioning system is more easily installed in the vehicle and is low in price.

Since the gas-liquid separator 24 is supported by the partition wall 8 in the automotive air-conditioning system, the gas-liquid separator 24 is easy to install in the vehicle, as compared to the case in which the gas-liquid separator 24 is supported by another portion of the vehicle. Therefore, the automotive air-conditioning system is more easily installed in the vehicle.

More specifically, since the gas-liquid separator 24 is supported by the partition wall 8 through the bracket 86, the pin holes 94 formed in the bracket 86, and the pins 96 fitted in the pin holes 94 as a supporting device, the gas-liquid separator 24 is more easily installed in the vehicle.

According to the automotive air-conditioning system, since the supporting device of the gas-liquid separator 24 further includes the buffering member 98 with the thermal insulating properties and the elasticity, it is possible to prevent the heat, vibration and noises in the engine room 6 from being transmitted to the vehicle interior 2. For that reason, the comfort of vehicle occupants is maintained in the vehicle to which the above-described automotive air-conditioning system is applied.

Furthermore in the automotive air-conditioning system, the block 38 and the first and second flanges 56 and 82 are arranged in series. The block 38 and the first and second flanges 56 and 82 are therefore connected to each other in one connection direction without difficulty. As a result, the automotive air-conditioning system is more easily installed in the vehicle.

The automotive air-conditioning system uses CO₂ as refrigerant, and it is then environmentally friendly. Moreover, in the automotive air-conditioning system, the gas-liquid separator 24 separates a liquid-phase component contained in the refrigerant, so that liquid compression in the compressor 14 is prevented from taking place, and the durability of the system is maintained.

The invention is not limited to the above-described one embodiment and can be modified in various ways.

Although in the one embodiment, the cover plate 36 of the gas-liquid separator 24 and the block 38 are independent from each other, they may be formed integral with each other.

According to the one embodiment, the high-temperature portion 18a and the low-temperature portion 18b of the internal heat exchanger 18 are formed of the pipes (heat exchange pipes) arranged to contact each other. However, a pipe of a double-pipe structure type may be utilized as an internal heat exchanger.

In the one embodiment, the supply path 42, the discharge path 43 and the horizontal hole 54 are formed in the single block 38. However, a plurality of blocks may be disposed on the cover plate 36 instead. In other words, the horizontal hole 54, the supply path 42 and the discharge path 43 may be formed in three discrete blocks, respectively. In this case, one block serves as the portion of the block 38 in which the horizontal hole 54 is formed (bridge portion). Another block serves as the portion of the block 38 in which the supply path 42 is formed (second connecting portion). The other block serves as the portion of the block 38 in which the discharge path 43 is formed (fourth connecting portion).

The portion of the first flange 56 in which the through hole 62 is formed (sixth connecting portion) and the portion of the first flange 56 in which the through hole 64 is formed (first connecting portion) may also be formed into two discrete flanges, respectively.

The portion of the second flange 82 in which the through hole 62 is formed (fifth connecting portion) and the portion of the second flange 82 in which the through hole 64 is formed (third connecting portion) may also be formed into two discrete flanges, respectively.

From the standpoint of reducing the number of parts, however, it is preferable that the supply path 42, the discharge path 43 and the horizontal hole 54 be formed in the single block 38, and that the block 38 be connected with the first and second flanges 56 and 82, as in the one embodiment.

Although in the one embodiment, the first and second flanges 56 and 82 are fastened to the block 38 with the single connecting bolt 80, a plurality of connecting bolts may be used instead. From the standpoint of reducing the number of parts, however, it is preferable that the first and second flanges 56 and 82 be fastened to the block 38 with the single connecting bolt 80 as in the one embodiment.

According to the one embodiment, the shape of the bracket 86 is not particularly limited. In addition, the pin holes 94 and the pins 96 are formed in the bracket 86 and the partition wall 8, respectively. However, the partition wall 8 may be provided with pin holes, and the bracket 86 with pins. The engaging members between the bracket 86 and the partition wall 8 are not limited to the pins and the pin holes, and the shape of the buffering member 98 is not particularly limited, either.

The invention thus described, it will be obvious that the same may be varied in many ways. Such variations are not to be regarded as a departure from the scope of the invention, and all such modifications as would be obvious to one skilled in the art are intended to be included within the scope of the following claims.

## Claims

1. An automotive air-conditioning system comprising:
a gas-liquid separator (24), a compressor (14) and a radiator (16), the gas-liquid separator (24), the compressor (14) and the radiator (16) being inserted in a first flow channel (30) of a refrigerant, which is suitable to extend within an engine room (6), in the order named in a flowing direction of the refrigerant;
a pressure reducer (20) and an evaporator (22), the pressure reducer (20) and the evaporator (22) being inserted in a second flow channel (32) of the refrigerant, which is suitable to extend within a vehicle interior (2), in the order named in the flowing direction of the refrigerant;
an internal heat exchanger (18) inserted in the first flow channel (30); and
a connecting device disposable near a partition wall (8) that separates the engine room (6) from the vehicle interior (2), and circularly connecting the first and second flow channels (30, 32) to each other, the connecting device including a first connecting portion formed at a downstream end of the second flow channel (32), and a second connecting portion formed at an inlet of the gas-liquid separator (24) and connected to the first connecting portion, wherein the internal heat exchanger (18) includes a high-temperature portion (18a) disposed in a high-pressure area of the first flow channel (30) extending between the radiator (16) and the pressure reducer (20), a low-temperature portion (18b) disposed in a low-pressure area of the first flow channel (30) extending between the gas-liquid separator (24) and the compressor (14), the low-temperature portion (18b) receiving heat from the high-temperature portion (18a), and a third connecting portion that is formed at an inlet of the low-temperature portion (18b), wherein the gas-liquid separator (24) includes a fourth connecting portion formed at an outlet thereof and connected to the third connecting portion,
wherein the internal heat exchanger (18) further includes a fifth connecting portion formed at the outlet of the high-temperature portion (18a), and
wherein the connecting device further includes a sixth connecting portion formed at an upstream end of the second flow channel (32), and a bridge portion formed integrally with both the second connecting portion and the fourth connecting portion of the gas-liquid separator (24), the bridge portion being connected to both the fifth and sixth connecting portions and having an internal flow channel (54) through which the outlet of the high-temperature portion (18a) and the upstream end of the second flow channel (32) communicate with each other,
**characterized in that**:
the automotive air-conditioning system further comprises a supporting device for supporting the gas-liquid separator (24) by using the partition wall (8).

2. The automotive air-conditioning system according to claim 1, **characterized in that**:
the supporting device includes
a bracket (86) holding the gas-liquid separator (24), and
an engaging member (94, 96) interposed between the bracket (86) and the partition wall (8) and engaging the bracket (86) and the partition wall (8) with each other.

3. The automotive air-conditioning system according to claim 2, **characterized in that**:
the supporting device further includes a buffering member (98) having thermal insulating properties and elasticity and interposed between the bracket (86) and the partition wall (8).

4. The automotive air-conditioning system according to any one of claims 1, 2 and 3, **characterized in that**:
the first and second connecting portions of the connecting device, the fourth connecting portion of the gas-liquid separator (24) and the third connecting portion of the internal heat exchanger (18) are arranged in one straight line; and
the sixth connecting portion of the connecting device, the bridge portion, and the fifth connecting portion of the internal heat exchanger (18) are arranged in another straight line parallel to the one straight line.

5. The automotive air-conditioning system according to claim 4, **characterized in that**:
the first and sixth connecting portions of the connecting device are integrally formed;
the third and fifth connection portions of the internal heat exchanger (18) are integrally formed; and
the connecting device includes
a single bolt (80) coupling the first connecting portion with the second connecting portion, coupling the bridge portion with the fifth and sixth connecting portions and coupling the third connecting portion with the fourth connecting portion.

6. The automotive air-conditioning system according to any one of the preceding clams, **characterized in that**:
the refrigerant is CO₂.

## Patentansprüche

1. Ein Fahrzeugklimaanlagensystem, das aufweist:
einen Gas-Flüssigkeitsabscheider (24), einen Kompressor (14) und einen Kühler (16), wobei der Gas-Flüssigkeitsabscheider (24), der Kompressor (14) und der Kühler (16) in einen ersten Strömungskanal (30) eines Kältemittels, der geeignet ist, sich innerhalb eines Motorraums (6) zu erstrecken, in der Reihenfolge, wie sie in einer Strömungsrichtung des Kältemittels genannt ist, eingebracht sind;
einen Druckminderer (20) und einen Verdampfer (22), wobei der Druckminderer (20) und der Verdampfer (22) in einen zweiten Strömungskanal (32) des Kältemittels, der geeignet ist, sich innerhalb eines Fahrzeuginnenraums (2) zu erstrecken, in der Reihenfolge, wie sie in der Strömungsrichtung des Kältemittels genannt ist, eingebracht sind;
einen internen Wärmetauscher (18), der in den ersten Strömungskanal (30) eingebracht ist; und
eine Verbindungsvorrichtung, die nahe einer Zwischenwand (8) verfügbar ist, die den Motorraum (6) von dem Fahrzeuginnenraum (2) abtrennt, und den ersten und zweiten Strömungskanal (30, 32) kreislaufartig miteinander verbindet, wobei die Verbindungsvorrichtung einen ersten Verbindungsabschnitt, der an einem stromabwärts gelegenen Ende des zweiten Strömungskanals (32) geformt ist, und einen zweiten Verbindungsabschnitt, der an einer Einlassöffnung des Gas-Flüssigkeitsabscheiders (24) geformt und mit der ersten Verbindungsvorrichtung verbunden ist, enthält, wobei der interne Wärmetauscher (18) einen Hochtemperaturabschnitt (18a), der in einem Hochdruckgebiet des ersten Strömungskanals (30) angeordnet ist, und der sich zwischen dem Kühler (16) und dem Druckminderer (20) erstreckt, einen Niedertemperaturabschnitt (18b), der in einem Niederdruckgebiet des ersten Strömungskanals (30) verfügbar ist, und der sich zwischen dem Gas-Flüssigkeitsabscheider (24) und dem Kompressor (14) erstreckt, wobei der Niedertemperaturabschnitt (18b) Wärme von dem Hochtemperaturabschnitt (18a) empfängt, und einen dritten Verbindungsabschnitt enthält, der an einer Einlassöffnung des Niedertemperaturabschnitts (18b) geformt ist, wobei der Gas-Flüssigkeitsabscheider (24) einen vierten Verbindungsabschnitt enthält, der an einem Auslass dessen geformt und mit dem dritten Verbindungsabschnitt verbunden ist,
wobei der interne Wärmetauscher (18) des Weiteren einen fünften Verbindungsabschnitt, der an dem Auslass des Hochtemperaturabschnitts (18a) geformt ist, enthält, und
wobei die Verbindungsvorrichtung des Weiteren einen sechsten Verbindungsabschnitt, der an einem stromaufwärts gelegenen Ende des zweiten Strömungskanals (32) geformt ist, und einen Überbrückungsabschnitt, der einstückig sowohl mit dem zweiten Verbindungsabschnitt als auch mit dem vierten Verbindungsabschnitt des Gas-Flüssigkeitsabscheiders (24) geformt ist, enthält, wobei der Überbrückungsabschnitt sowohl mit dem fünften als auch mit dem sechsten Verbindungsabschnitt verbunden ist und einen internen Strömungskanal (54) hat, durch welchen der Auslass des Hochtemperaturabschnitts (18a) und das stromaufwärts gelegene Ende des zweiten Strömungskanals (32) miteinander kommunizieren,
**dadurch gekennzeichnet, dass**:
das Fahrzeugklimaanlagensystem des Weiteren eine Trägervorrichtung, zum Stützen des Gas-Flüssigkeitsabscheiders (24) durch Verwendung der Zwischenwand (8), aufweist.

2. Fahrzeugklimaanlagensystem gemäß Anspruch 1, **dadurch gekennzeichnet, dass**:
die Trägervorrichtung
einen Träger (86), der den Gas-Flüssigkeitsabscheider (24) hält, und ein Eingriffsglied (94, 96), das zwischen dem Träger (86) und der Zwischenwand (8) eingebracht ist und den Träger (86) und die Zwischenwand (8) miteinander in Eingriff bringt, beinhaltet.

3. Fahrzeugklimaanlagensystem gemäß Anspruch 2, **dadurch gekennzeichnet, dass**:
die Trägervorrichtung des Weiteren ein Pufferglied (98) enthält, das thermisch isolierende Eigenschaften und Elastizität aufweist, und das zwischen den Träger (86) und die Zwischenwand (8) eingebracht ist.

4. Fahrzeugklimaanlagensystem gemäß einem der Ansprüche 1, 2 oder 3, **dadurch gekennzeichnet, dass**:
die ersten und zweiten Verbindungsabschnitte der Verbindungsvorrichtung, der vierte Verbindungsabschnitt des Gas-Flüssigkeitsabscheiders (24) und der dritte Verbindungsabschnitt des internen Wärmetauschers (18) in einer geraden Linie angeordnet sind; und
der sechste Verbindungsabschnitt der Verbindungsvorrichtung, der Überbrückungsabschnitt und der fünfte Verbindungsabschnitt des internen Wärmetauschers (18) in einer anderen geraden Linie angeordnet sind, die parallel zu der einen geraden Linie ist.

5. Fahrzeugklimaanlagensystem gemäß Anspruch 4, **dadurch gekennzeichnet, dass**:
die ersten und sechsten Verbindungsabschnitte der Verbindungsvorrichtung einstückig geformt sind;
die dritten und fünften Verbindungsabschnitte des internen Wärmetauschers (18) einstückig geformt sind; und
die Verbindungsvorrichtung
einen einzelnen Bolzen (80) enthält, der den ersten Verbindungsabschnitt mit dem zweiten Verbindungsabschnitt koppelt, den Überbrückungsabschnitt mit dem fünften und sechsten Verbindungsabschnitt koppelt, und den dritten Verbindungsabschnitt mit dem vierten Verbindungsabschnitt koppelt.

6. Fahrzeugklimaanlagensystem gemäß einem der vorangegangenen Ansprüche, **dadurch gekennzeichnet, dass**:
das Kältemittel CO₂ ist.

## Revendications

1. Système de conditionnement d'air pour automobile, comprenant :
un séparateur de gaz-liquide (24), un compresseur (14) et un radiateur (16), le séparateur de gaz - liquide (24), le compresseur (14) et le radiateur (16) étant insérés dans un premier canal d'écoulement (30) d'un réfrigérant, qui est approprié pour s'étendre à l'intérieur d'une chambre de moteur (6), dans l'ordre mentionné, dans une direction d'écoulement du réfrigérant ;
un réducteur de pression (20) et un évaporateur (22), le réducteur de pression (20) et l'évaporateur (22) étant insérés dans un second canal d'écoulement (32) du réfrigérant, qui est approprié pour s'étendre dans un intérieur de véhicule (2), dans l'ordre mentionné, dans la direction d'écoulement du réfrigérant ;
un échangeur de chaleur interne (18) inséré dans le premier canal d'écoulement (30) ; et
un dispositif de raccordement pouvant être disposé à proximité d'une paroi de séparation (8) qui sépare la chambre de moteur (6) de l'intérieur de véhicule (2), et raccordant de manière circulaire les premier et second canaux d'écoulement (30, 32) entre eux, le dispositif de raccordement comprenant une première partie de raccordement formée au niveau d'une extrémité en aval du second canal d'écoulement (32), et une deuxième partie de raccordement formée au niveau d'une entrée du séparateur de gaz - liquide (24) et raccordée à la première partie de raccordement, dans lequel l'échangeur de chaleur interne (18) comprend une partie à haute température (18a) disposée dans une zone de haute pression du premier canal d'écoulement (30) s'étendant entre le radiateur (16) et le réducteur de pression (20), une partie à basse température (18b) disposée dans une zone de basse pression du premier canal d'écoulement (30) s'étendant entre le séparateur de gaz-liquide (24) et le compresseur (14), la partie à basse température (18b) recevant la chaleur de la partie à haute température (18a), et une troisième partie de raccordement qui est formée au niveau d'une entrée de la partie à basse température (18b), dans lequel le séparateur de gaz - liquide (24) comprend une quatrième partie de raccordement formée au niveau de sa sortie et raccordée à la troisième partie de raccordement,
dans lequel l'échangeur de chaleur interne (18) comprend en outre une cinquième partie de raccordement formée au niveau de la sortie de la partie à haute température (18a), et
dans lequel le dispositif de raccordement comprend en outre une sixième partie de raccordement formée au niveau d'une extrémité en amont du second canal d'écoulement (32) et une partie de pont formée de manière solidaire à la fois avec la deuxième partie de raccordement et la quatrième partie de raccordement du séparateur de gaz - liquide (24), la partie de pont étant raccordée à la fois aux cinquième et sixième parties de raccordement et ayant un canal d'écoulement interne (54) à travers lequel la sortie de la partie à haute température (18a) et l'extrémité en amont du second canal d'écoulement (32) communiquent entre elles,
**caractérisé en ce que** :
le système de conditionnement d'air pour automobile comprend en outre un dispositif de support pour supporter le séparateur de gaz - liquide (24) en utilisant la paroi de séparation (8).

2. Système de conditionnement d'air pour automobile selon la revendication 1, **caractérisé en ce que** :
le dispositif de support comprend :
une console (86) maintenant le séparateur de gaz - liquide (24), et
un élément de mise en prise (94, 96) intercalé entre la console (86) et la paroi de séparation (8) et mettant en prise la console (86) et la paroi de séparation (8) entre elles.

3. Système de conditionnement d'air pour automobile selon la revendication 2, **caractérisé en ce que** :
le dispositif de support comprend en outre un élément tampon (98) ayant des propriétés d'isolation thermique et d'élasticité et étant intercalé entre la console (86) et la paroi de séparation (8).

4. Système de conditionnement d'air pour automobile selon l'une quelconque des revendications 1, 2 et 3, **caractérisé en ce que** :
les première et deuxième parties de raccordement du dispositif de raccordement, la quatrième partie de raccordement du séparateur de gaz - liquide (24) et la troisième partie de raccordement de l'échangeur de chaleur interne (18) sont agencées sur une ligne droite ; et
la sixième partie de raccordement du dispositif de raccordement, la partie de pont et la cinquième partie de raccordement de l'échangeur de chaleur interne (18) sont agencées sur une autre ligne droite parallèle à la première ligne droite.

5. Système de conditionnement d'air pour automobile selon la revendication 4, **caractérisé en ce que** :
les première et sixième parties de raccordement du dispositif de raccordement sont formées de manière solidaire ;
les troisième et cinquième parties de raccordement de l'échangeur de chaleur interne (18) sont formées de manière solidaire ; et
le dispositif de raccordement comprend :
un seul boulon (80) couplant la première partie de raccordement avec la deuxième partie de raccordement, couplant la partie de pont avec les cinquième et sixième parties de raccordement et couplant la troisième partie de raccordement avec la quatrième partie de raccordement.

6. Système de conditionnement d'air pour automobile selon l'une quelconque des revendications précédentes, **caractérisé en ce que** :
le réfrigérant est du CO₂.
